# EUROPEAN PATENT SPECIFICATION

(11) **EP 2 646 209 B1**
(45) Date of publication and mention of the grant of the patent: **17.09.2014**
(21) Application number: 11794597.2
(22) Date of filing: 29.11.2011
(51) Int. Cl.: B28B 3/20, B28B 17/00, G05B 19/418

(54) **METHOD AND SYSTEM FOR REAL-TIME, CLOSED-LOOP SHAPE CONTROL OF EXTRUDED CERAMIC HONEYCOMB STRUCTURES**
VERFAHREN UND SYSTEM FÜR ECHTZEIT-FORMKONTROLLE VON EXTRUDIERTEN KERAMIKWABENKÖRPERN MIT GESCHLOSSENEM REGELKREIS
PROCÉDÉ ET SYSTÈME DE COMMANDE DE FORME À BOUCLE FERMÉE, EN TEMPS RÉEL, POUR STRUCTURES EN NID-D'ABEILLES CÉRAMIQUES EXTRUDÉES

(30) Priority: 30.11.2010 US 418159 P
(43) Date of publication of application: 09.10.2013
(73) Proprietor: Corning Incorporated, Corning, New York 14831 (US)
(72) Inventor: CAFFREY, Stephen John, Rochester New York 14612 (US); CITRINITI, Joseph Henry, Corning New York 14830 (US); LOCKER, Robert John, Corning New York 14830 (US); LUBBERTS, Robert Bernard, Woodhull New York 14898 (US); MCCAULEY, Daniel Edward, Montour Falls, New York 14865 (US); POTTS, David Robert, Blacksburg Virginia 24060 (US); TREACY, JR, David Robertson, Horseheads New York 14845 (US); VOLINO, Casey Allen, Tioga Pennsylvania 16946 (US)
(74) Representative: Sturm, Christoph
(86) International application number: PCT/US2011/062282
(87) International publication number: WO 2012/074946

(56) References cited:
- WO-A2-2009/108309
- JP-A- 63 290 708
- US-A1- 2002 167 102

## Description

### FIELD

Various aspects of the disclosure generally relate to shape control of extruded ceramic honeycomb structures, and in particular relate to systems and methods for real-time, closed-loop shape control of extruded ceramic honeycomb structures.

### BACKGROUND

The process of forming a ceramic honeycomb structure involves forming an extrudate having a select or desired shape. Once extruded, it is difficult to change the extrudate shape in a controlled way, so that the extrudate shape must be within a certain tolerance of the desired shape upon extrusion. However, differences between a desired extrudate shape and the actual extrudate shape can occur. Present systems and methods for controlling the shape of an extrudate to within the select tolerance utilize inconvenient and time-consuming off-line measurements. This results in substantial product waste and reduced throughput, both of which add expense to the manufacturing process.

Document WO 2009/108309 A2 discloses a method of extruding ceramic-forming batch material and includes conveying the ceramic-forming batch material, and exposing an underlying portion of the batch material. The method further includes measuring a moisture content of the underlying portion of the conveyed batch material while the batch material is being conveyed, and extruding the conveyed batch material. The moisture content is measured in real-time.

Document US 20020167102 A1 discloses a method and a control system for producing a ceramic molding having a desired shape as disclosed in the preamble of claims 1 and 11 respectively and especially by extruding a ceramic material pressure fed into a resistance pipe from a mold by using a production apparatus including a screw type extruder and the mold connected to the distal end of the extruder through the resistance pipe, the c eramic material pressure-fed from the extruder into the resistance pipe is heated or cooled from round the periphery of the resistance pipe so as to control the shape of the ceramic molding extruded from the mold.

Document JP 63 290708 A discloses an extrusion molding device consisting of an upper and a lower extruder and an extruded belt-shaped green sheet whic is guided to a following dryer.

### SUMMARY

An aspect of the disclosure is a method for controlling a shape of a ceramic precursor extrudate as defined in claim 1.

Another aspect of the disclosure is a ceramic precursor extrudate control system for controlling a shape of a ceramic precursor extrudate as defined in claim 11.

Additional features and advantages of the disclosure are set forth in the detailed description that follows and, in part, will be readily apparent to those skilled in the art from that description or recognized by practicing the disclosure as described herein, including the detailed description that follows, the claims, and the appended drawings.

It is to be understood that both the foregoing general description and the following detailed description present embodiments of the disclosure and are intended to provide an overview or framework for understanding the nature and character of the disclosure as it is claimed. The accompanying drawings are included to provide a further understanding of the disclosure and are incorporated into and constitute a part of this specification. The drawings illustrate some aspects and embodiments of the disclosure and, together with the description, serve to explain the principles and operations of the disclosure.

### BRIEF DESCRIPTION OF THE DRAWINGS

**FIG. 1** is a schematic diagram of an example embodiment of an extrusion system used to form ceramic honeycomb structures and that is capable of providing real-time, closed-loop control of the extrudate shape;
**FIG. 2** is an alternate schematic diagram of the extrusion system of **FIG. 1****;**
**FIG. 3** is an isometric view of an example extrudate, showing how the extrudate is cut into logs;
**FIG.** 4 is a close-up isometric view of an example greenware piece and the subsequent ceramic body formed from the original extrudate;
**FIG. 5A** through **FIG. 5C** are sweep curves for an example extrusion processes where the batch water is varied from 15.1% to 16.1% **(****FIG. 5A****),** rotation rate is varied from 16 to 20 RPM **FIG. 5B****),** and the barrel temperature is varied from -4 °C to +2 °C **(****FIG. 5C****);**
**FIG. 6** is a hypothetical sweep curve representative of those shown in **FIG. 5A** through **FIG. 5D****,** that shows how the pressure differential ΔP is calculated from measurements of the batch material skin temperature T_{34S} (triangle) and the batch material core temperature T_{34C} (diamond);
**FIG. 7A** through **FIG. 7D** are sweep curves for example extrusion processes where the rotation rate and barrel temperature were varied and the batch water was kept at a constant 15.5%, with respective extrudate shape contours (both desired shape SD and measured shape S_{M}) shown for the corresponding sweep curve;
**FIG. 8A** through **FIG. 8D** are sweep curves for example extrusion processes similar to **FIG. 7A** through FIG. **7D****,** where the rotation rate and barrel temperature were varied and the batch water was kept at a constant 16.1 %;
**FIG. 9A** through **FIG. 9D** are sweep curves for example extrusion processes similar to **FIG. 7A** through **FIG. 7D****,** where the rotation rate and moisture content were varied and the barrel temperature was kept at a constant 1 °C;
**FIG.** 10 is a plot of the shape parameter SP vs. pressure differential ΔP (psi) as determined from a family of shape curves that include those of **FIG. 7A-7D****,** **8A-8D** and **9A-9D****,** illustrating the distribution of extrudate shape with pressure differential; and
**FIG. 11** is a plot of the evolution of the extrudate shape with pressure differential for example data points A through D taken from the data of plot of **FIG. 10****,** including a "good" shape parameter value SP = 0 for data point B at about 1,03MPa (150 psi).
**FIG. 12** is a plot of extrudate shape variation (measured at the exit of the die) versus batch temperature variation (measured across the extruder barrel), showing correlation between shape variation and temperature variation.

### DETAILED DESCRIPTION

The ability to produce extrude-to-shape (ETS) ceramic honeycomb structures that meet a tight shape specification (e.g., a ±1.0 mm contour specification) depends on the ability to predict and adjust extrusion parameters for shrinkage, and to diagnose and correct shape errors in real time. Presently, shape control is performed using die conditioning, batch temperature control, and shrink-plate compensation. While batch temperature control to a fixed value (within a range) is an effective means for controlling shape and quality, it does not account for day-to-day changes in batch rheology, which can cause shape and process instabilities. Sudden changes in shape due to changes in the batch rheology can not only cause dimensional yield loss, but can require physical reconfiguration of the extrusion system (e.g., with new die and hardware set-up). Such system reconfiguration and the subsequent process stabilization can take anywhere from 1 to 3 hours.

While there is no known technology to directly measure the center-to-edge flow differential of an extrudate during extrusion, a present-day technique measures the pressure differential ΔP, which is the difference in center or core pressure P_{C} to the edge (skin) pressure P_{S}, i.e., ΔP = P_{C} - P_{S}. The pressure differential ΔP is measured off-line using, for example, a capillary rheometer. This measurement provides valuable information about the extrusion process and rheology. However, this pressure differential information is generated two to three hours after the extrusion has taken place, and this information alone is not sufficient for controlling the extrudate shape.

Reference is now made in detail to embodiments of the disclosure, examples of which are illustrated in the accompanying drawings. Whenever possible, the same reference numerals will be used throughout the drawings to refer to the same or like parts.

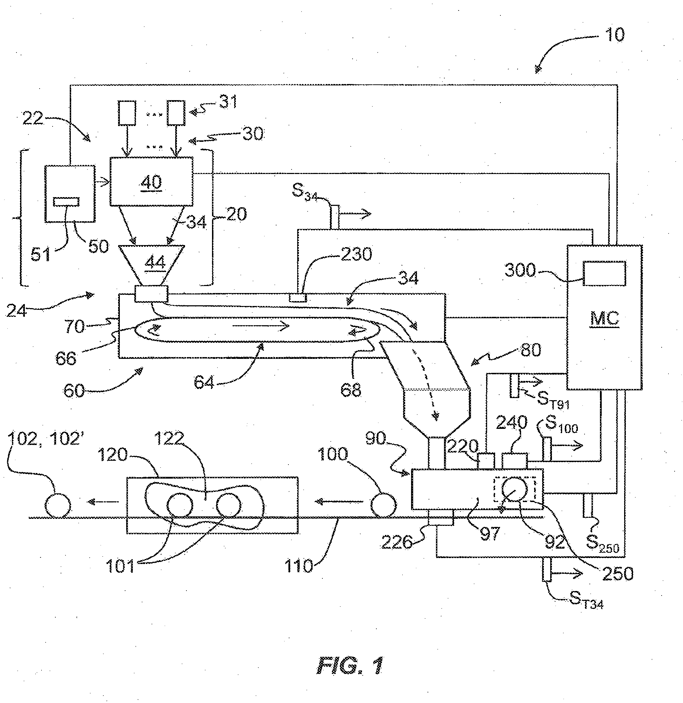

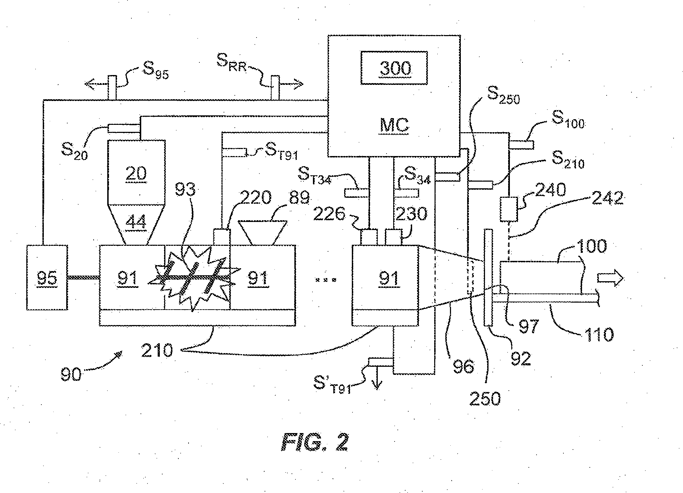

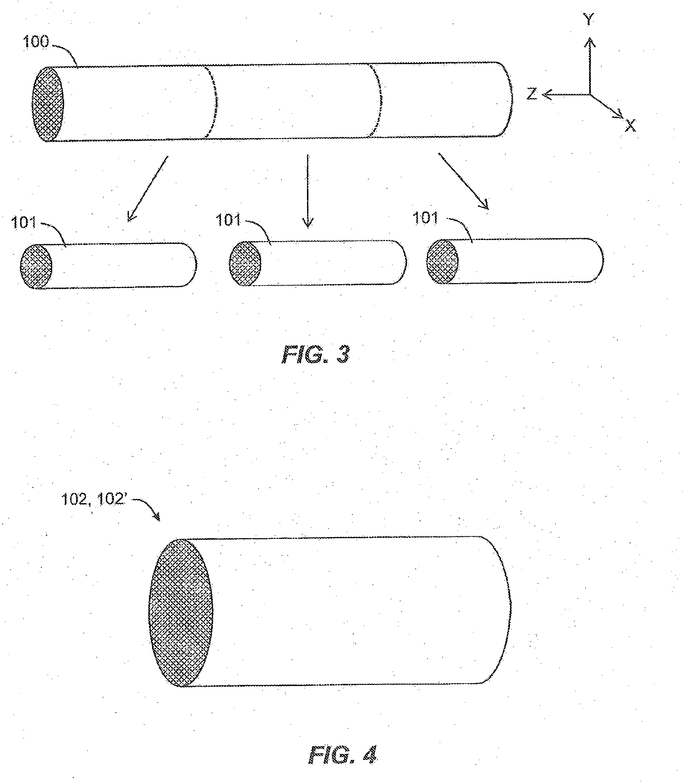

**FIG. 1** is a schematic diagram of an example embodiment of an extrusion system **10** used to form ceramic honeycomb structures, such as extrudate **100** and subsequent ceramic honeycomb bodies **101, 102** and **102'** (see **FIG.** 3 and **FIG. 4****).** System **10** is capable of providing real-time, closed-loop control of the extrudate shape. **FIG. 2** is an alternate schematic diagram of extrusion system **10** that highlights certain system features. As used herein, real-time control means system **10** generates a control response within a time period that is sufficiently short to allow system **10** to maintain, control and/or modify the extrudate shape within predetermined limits as it is extruded.

Extrusion system **10** includes a mixing stage or "wet tower" **20** having an input end **22** and an output end **24.** Wet tower **20** initially receives at input end **22** the various batch material constituents **30** in dry form from respective constituent sources **31,** and mixes them along with water (and optionally oil) to form an initial ceramic-forming (ceramic precursor) batch material **34** having a batch material water content or "batch water." The batch water is typically measured in weight percent (wt %) as compared to the dry weight of the batch material constituents (the symbol "%" is understood to mean weight-percent where applicable). Wet tower **20** includes, for example, a mixer **40** followed by a rotary cone **44.** Wet tower **20** also includes a water unit **50** configured to provide water to mixer **40** in select amounts, e.g., by weighing the amount of water added to the mixer using a delivery scale **51.** In an example, the batch water is determined by knowing the amount of water added to batch material constituents **30** using water unit **50.** Further in an example, the batch water is adjusted by adjusting the amount of water added to the batch material (or the batch material constituents) in water unit **50** via delivery scale **51.** In example embodiments, water unit **50** is controlled manually or automatically, as discussed below. Examples of batch material **34** are discussed below.

Extrusion system **10** further includes a conveyer unit **60** arranged adjacent output end **24** of wet tower **20.** Conveyor unit **60** includes a conveyor belt **64** with an input end **66** and an output end **68.** Conveyor belt **64** rotates clockwise as shown. Conveyor unit **60** includes a protective cover **70.**

Conveyor belt input end **66** is arranged at the output end **24** of wet tower **20** to receive batch material **34** therefrom. In an example embodiment, rotary cone **44** serves to deliver batch material **34** to conveyor belt input end **66** in a relatively uniform layer. In an example embodiment, batch material **34** is carried by conveyor belt **64** in a layer having a thickness between about 2,54 cm (one inch) and about 5,08 cm (two inches) and a width between about 25,4 cm (ten inches) and about 35,45 cm (fourteen inches). Wet tower **20** is configured to adjust the thickness of the layer of batch material **34** carried by conveyor belt 64.

Extrusion system 10 further includes a chute **80** and an extrusion unit **90.** Chute **80** is arranged between conveyor unit **60** and extrusion unit **90.** Chute **80** is configured to receive batch material **34** from the output end **68** of conveyor belt **64** and deliver it to extrusion unit **90,** which includes one or more barrels **91** and an extruder section **96.** The temperature of the one or more barrels **91** and extrusion screws **93** is regulated by a barrel and screw temperature control system **210,** which in an example flows a barrel and screw coolant (not shown). In an example, barrel and screw temperature control system **210** is configured (e.g., with temperature sensors) to provide a measurement of the barrel and/or screw temperature T₉₁ of one or more barrels **91** and/or screws **93** via a temperature signal **S'_{T91}** that is sent to a master controller **MC.** In an example, one of barrels **91** includes a vacuum vent **89** that allows for the removal of gas from batch material **34.**

Extrusion unit **90** is configured to receive batch material **34** and form billets therefrom, which are then pressed through an extrusion die **92** at an output end **97** of extruder section **96** to form extrudate **100.** In an example, this is accomplished by one or more extrusion screws **93** driven by a motor **95,** where the motor generates an electrical rotation rate signal **S_{RR}** that indicates the rotation rate RR of the one or more extrusion screws **93.** Motor **95** and extrusion screws **93** constitute an extrusion screw system. In an example embodiment, extrusion unit **90** includes multiple extrusion dies **92** that operate at once to simultaneously form multiple extrudates **100.** Extrusion unit **90** can also include multiple barrels **91,** such as shown in **FIG. 2****.**

In an example embodiment, extrusion system **10** includes at least one barrel temperature sensor **220,** an optional batch moisture sensor **230,** and a shape sensor unit **240 all** electrically connected to a master controller **MC.** Motor **95** and barrel temperature control system **210** are also electrically connected to master controller **MC.** Barrel temperature sensor **220** is operatively arranged relative to at least one barrel **91** and generates an electrical temperature signal **S_{T91}** representative of the barrel temperature T₉₁. Electrical temperature signal **S_{T91}** is provided to master controller **MC.** In an example where temperature sensor **220** is part of barrel temperature control system **210,** electrical temperature signal **S'_{T91}** is the same as electrical temperature signal **S_{T91}**.

Master controller **MC** also receives electrical rotation rate signal **S_{RR}** from motor 95 and can control the rotation rate **RR** via a motor control signal **S₉₅.**

The optional moisture sensor **230** is operatively arranged relative to batch material **34** and generates an electrical signal **S_{M34}** representative of the moisture content ("batch water") M₃₄. In this case, electrical batch water signal **S_{M34}** is provided to master controller **MC.** An example moisture-content measurement system for an extrusion system is described in US 2010-0300183 A1. As discussed above, batch water M₃₄ can also be determined by knowing how much water is added to the batch material constituents **30** at water unit **50.** Further, the batch water M₃₄ can be varied using delivery scale **51,** which can be operated manually or automatically via master controller **MC** to add select amounts of water to form batch material **34** with a select batch water M₃₄.

In an example embodiment, extrusion system **10** includes an in-line temperature sensor **250** arranged in extrusion unit **90** in extruder section **96** adjacent to die **92.** In-line temperature sensor **250** is configured to measure the batch material temperatures T₂₅₀ from the center or core (T_{34C}) to the edge or skin (T_{34S)} just prior to extrusion. In an example, in-line temperature sensor **250** is arranged from about 25,4 cm (10 inches) to about 30,48 cm (12 inches) behind die **92.** In-line temperature sensor **250** generates electrical temperature signals **S₂₅₀** corresponding to the measured temperatures T₂₅₀ of extrudate **100** across the extrudate (i.e., in the lateral cross-sectional direction).

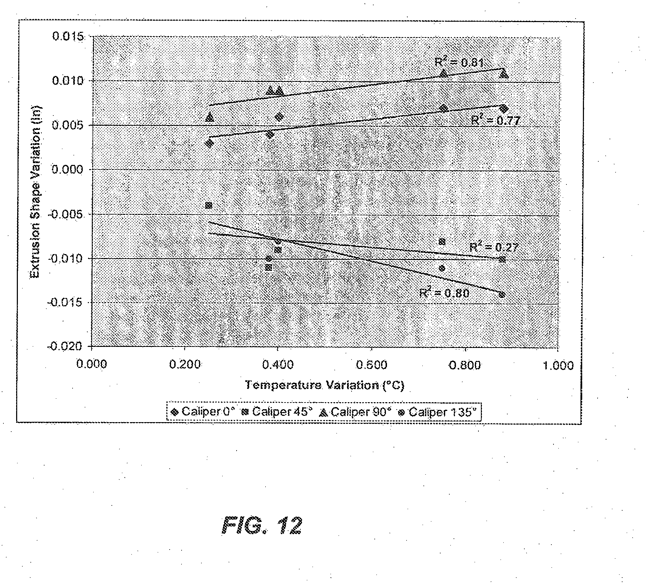

In an example, in-line temperature sensor **250** is electrically connected to master controller **MC** and provides electrical temperature signals **S₂₅₀** thereto. In an example, the measured temperatures T₂₅₀ correspond to a temperature profile across extrudate **100** during extrusion through die **92.** Such a temperature profile can assist in providing information about the pressure differential via temperature sweep curves (described below), which in turn provides information about flow rate of the extrudate through the die from the core to the skin, and thus provides information about the extrudate shape. Such a temperature profile also provides information about the shape of the extrudate at the exit of the extruder. Correlation between temperature and shape is demonstrated by the data provided in **FIG. 12****,** which shows increasing shape variation with increasing temperature variation of the batch across the barrel. An example in-line temperature sensor **250** is described in US 2010-0788,389. Thus, in an embodiment, the temperature profile from in-line temperature sensor **250** is used to compare with a shape measurement from shape sensor unit **240** to ensure a correspondence between the measured shape and the parameters that should directly relate to the measured shape. This comparison may be carried out automatically in master controller **MC.**

In another embodiment, one or more measured temperatures T₂₅₀ of the temperature profile of extrudate **100** are measured manually on a sample extrudate. Manually measured temperatures T₂₅₀ can be obtained using, for example, a hand-held temperature probe. Other manual measurements of extrudate **100** can also be made, such as the extrudate hardness using, for example, a penetrometer. These manual measurements can be used as described above to ensure that the batch rheology is acting in a consistent manner, particularly with respect to the measured extrudate shape.

Shape sensor unit **240** is arranged adjacent die **92** and generates an electrical signal **S₁₀₀** representative of the measured outer shape (profile) S_{M}(x,y,z) or S_{M}(r, θ, z) of extrudate **100** as it exits the die (see **FIG. 3****).** The cross-sectional shape or contour is generally given by S(x,y) or S(r, θ) for a given z value, where z is measured along the length of extrudate **100** (see **FIG. 3****).** The ideal or desired extrudate shape is denoted S_{D}. Electrical shape signal **S₁₀₀,** which is representative of the measured shape S_{M}, is provided to master controller **MC.** Master controller MC also includes the desired shape S_{D}, and is configured to compare the desired shape S_{D} to the measured shape S_{M}. In an example, shape sensor unit **240** uses a light beam **242** such as a laser beam to perform a non-contact shape measurement of extrudate **100.** In one embodiment, shape sensor unit 240 is a laser and camera based measurement system, as is available from Bytewise Measurement Systems of Columbus, Georgia, USA, as the Profile360™ Profile measurement System.

Master controller **MC** is also electrically connected to motor **95** to control the rotation rate RR (in rotations per minute or RPMs) of the one or more extrusion screws **93** via electrical RPM control signal **S₉₅.** Master controller **MC** is also optionally operably connected to wet tower **20** to control its operation relative to the overall operation of extrusion system **10.** In particular, master controller **MC** can be configured to control the operation of water unit **50** in wet tower **20** to control the amount of water added to the batch material to control the batch material moisture content (batch water) M₃₄. Master controller controls wet tower **20** with a wet tower control signal **S₂₀.**

In one embodiment, the barrel temperature T₉₁ is measured at a barrel **91** whose temperature is controlled using barrel temperature control system **210,** and the barrel temperature is changed in response to the measured batch material temperature T₃₄. The batch material temperature T₃₄ can be determined and compared to a temperature set-point T_{SET} for batch material **34.** This information can be used to regulate the operation of barrel temperature control system **210** to control the barrel temperature T₉₁ to correspond to the batch material set-point temperature T_{SET}.

In an example, the batch material temperature T₃₄ can be measured in extruder system **10** using, for example, a temperature sensor **226** and corresponding electrical signal **S_{T34}** provided to master controller **MC.** Note, however, that batch material temperature measurements need not be used in the systems and methods described herein. Rather, the barrel temperature T₉₁ can be used.

With continuing reference to **FIG. 1** and **FIG. 2****,** extrudate **100** exits extrusion die 92 and is deposited onto a conveyor 110 arranged adjacent the extrusion die. Extrudate **100** constitutes an example of a ceramic honeycomb structure. In an example embodiment, extrudate **100** is cut into sections called "greenwares" or "logs" **101,** as shown in **FIG. 3****.** Logs **101** may be, for example about 91,44 cm (3 feet) in length. Greenwares **101** are then conveyed by conveyor **110** to a drying station (e.g., an oven or "applicator") **120.** Drying station **120** has an interior **122** where logs **101** reside while drying. Drying station **120** may use, for example, radio-frequency (RF) radiation or microwave frequency (MF) radiation, to effectuate drying.

The drying process is carried out until logs **101** are substantially dry, meaning that most or all of the liquid initially present in extrudate **100** has been removed so that the moisture content has been reduced to a level acceptable for cutting and firing the piece at high temperature. In example embodiments, logs **101** contain less than 2 wt % water, or in some cases less than 1 wt % water, upon exiting drying station **120.** Having the proper moisture content at this stage is critical because logs that are too moist become damaged upon cutting (e.g., are subject to "smearing"), and can also damage the cutting saw.

If logs 101 are sufficiently dry, they are cut into smaller greenware pieces **102** (see **FIG. 4****)** and the cut pieces fired (e.g., in a hot-air oven). This transforms greenware pieces **102** into respective ceramic bodies **102'** having a honeycomb structure with thin interconnecting porous walls that form parallel cell channels longitudinally extending between end faces, as shown in **FIG. 4****.** In an example embodiment, ceramic body **102'** is used to form a ceramic filter. Note that extrudate **100,** logs **101,** greenware pieces **102** and ceramic body **102'** all constitute different forms of a ceramic honeycomb structure.

Exemplary ceramic bodies **102'** comprised of AT-based ceramic materials are discussed in U.S. Pat. No. 7,001,861, U.S. Pat. No. 6,942,713, U.S. Pat. No. 6,620,751, and U.S. Pat. No. 7,259,120. Such AT-based bodies are used as an alternative to cordierite and silicon carbide (SiC) bodies for high-temperature applications, such as automotive emissions control applications. The systems and methods disclosed herein apply to any type of greenware amenable to RF or MW drying techniques.

In an embodiment, master controller **MC** is or includes a computer or like device that has, for example, a floppy disk drive, CD-ROM drive, DVD drive, magnetic optical disk (MOD) device (not shown), or any other digital device including a network-connecting device such as an Ethernet device (not shown) for reading instructions and/or data from a computer-readable medium, such as a floppy disk, a CD-ROM, a DVD, a MOD or another digital source such as a network or the Internet, as well as yet to be developed digital means. In another embodiment, master controller **MC** executes instructions stored in firmware (not shown).

In an example, master controller **MC** is programmed to perform the functions and carry out the methods described herein. The term computer as used herein broadly refers to computers, processors, microcontrollers, microcomputers, programmable logic controllers, application specific integrated circuits, field-programmable gate arrays, and the like.

In an example, software may be employed to implement or aid in performing the disclosed methods directed to maintaining extrudate shape to within a select specification. The software maybe executable by the general-purpose computer. In operation, the software and possibly the associated data records may be stored within a general-purpose computer platform. At other times, however, the software may be stored at other locations and/or transported for loading into the appropriate general-purpose computer systems. Hence, the embodiments discussed herein may involve one or more software products in the form of one or more modules of code carried by at least one machine-readable medium. Execution of such code by a processor may be used to implement embodiments discussed and illustrated herein. Also, embodiments of master controller **MC** include the use of multiple computers, including, a master controller, one or more slave controllers, one or more supervisory controllers, and combinations thereof. In an example, master controller MC includes a display **300.**

### Batch materials

In an example, the aqueous-based ceramic precursor mixture formed in wet tower **20** comprises a batch material mixture of ceramic (such as cordierite) forming inorganic precursor materials, an optional pore former such as graphite or starch, a binder, a lubricant, and a vehicle. The inorganic batch material components can be any combination of inorganic components (including one or more ceramics) which can, upon firing, provide a porous ceramic having primary sintered phase composition (such as a primary sintered phase composition of cordierite or aluminum titanate).

In an example embodiment, the inorganic batch material components can be selected from a magnesium oxide source, an alumina-forming source, and a silica source. The batch material components are further selected so as to yield a ceramic article comprising predominantly cordierite, or a mixture of cordierite, mullite and/or spinel upon firing. For example, the inorganic batch material components can be selected to provide a ceramic article that comprises at least about 90% by weight cordierite, or more preferably 93% by weight cordierite. In an example embodiment, the cordierite-containing honeycomb article consists essentially of, as characterized in an oxide weight percent basis, from about 49 to about 53 percent by weight SiO₂, from about 33 to about 38 percent by weight Al₂O₃, and from about 12 to about 16 percent by weight MgO. To this end, an exemplary inorganic cordierite precursor powder batch material composition preferably comprises about 33 to about 41 weight percent of an aluminum oxide source, about 46 to about 53 weight percent of a silica source, and about 11 to about 17 weight percent of a magnesium oxide source. Exemplary non-limiting inorganic batch material component mixtures suitable for forming cordierite are disclosed in U.S. Pat. No. 3,885,977; 5,258,150; US Pubs. No. 2004/0261384 and 2004/0029707; and RE 38,888.

The inorganic ceramic batch material components can include synthetically produced materials such as oxides, hydroxides, and the like. Alternatively, they can be naturally occurring minerals such as clays, talcs, or any combination thereof, which are selected depending on the properties desired in the final ceramic body.

In one example, an "inorganic batch material" includes ceramic-based mixtures that are "substantially inorganic" because they typically include some pore-forming organics that make up a minor portion (e.g., about 1% to about 7%) of the mixture.

In one embodiment, a relationship between the indirect temperature measured for a given ceramic precursor formulation and a temperature directly measured is determined and then used to infer the temperature of the batch material **34** including, for example, the batch core temperature T_{34C} by indirectly measuring the temperature of batch material and using the known relationship for the two temperatures to estimate the batch material's core temperature.

In another embodiment, heat transfer from the extruder barrel **91** to the batch **material 34** (or from the batch material to the barrel) is regulated at a rate sufficient to maintain a desirable difference between the batch material's core temperature T_{34C} and its skin temperature T_{34S}. The term "heat transfer," as used herein, includes cooling the batch material's temperature by transferring heat from the batch material to at least one extruder barrel 91. In one embodiment, the temperature range is selected such that it produces an extrudate **100 with** a uniform shape, resulting in a larger number of error-free ceramic honeycomb structures and a reduced need for reworking.

### Temperature sweep curves

For most, if not all, ceramic precursor batch materials **34** that can be extruded to form an extrudate **100**, there are optimal core and skin temperatures T_{34C} and T_{34S}. These optimal core and skin temperatures can change due to variations in batch rheology. Extrudates **100** formed at or near the optimal core and skin temperatures for a given batch formulation will generally have fewer imperfections than those formed at sub-optimal temperatures.

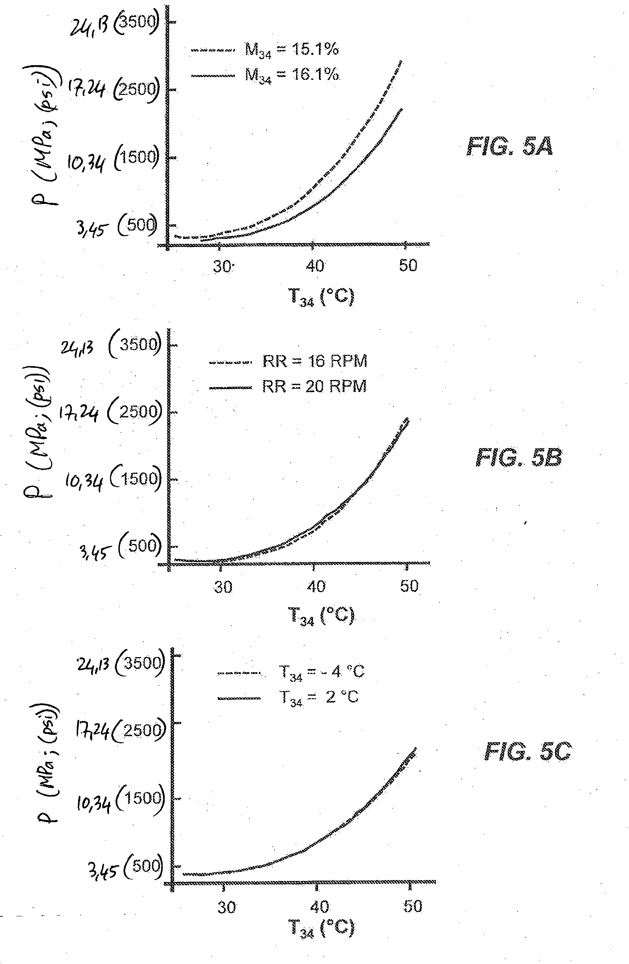

**FIG. 5A** through **FIG. 5C** are plots of experimentally measured values of the pressure P (MPa; (psi)) versus the batch temperature T₃₄ (°C) for two different batch water values of M₃₄ = 15.1% (dashed line) and 16.1% (solid line) **(****FIG. 5A****),** for two different extrusion screw rotation rates of RR = 16 RPM (dashed line) and 20 RPM (solid line) **(****FIG. 5B****)** and for two different barrel temperatures T₉₁ = -4 °C (dashed line) and +2 °C (solid line) **(****FIG. 5C****).** The curves in the plots are called temperature sweep curves or just sweep curves. The pressure P is measured while conducting the temperature sweep test using, for example, a capillary rheometer. The capillary rheometer used to collect the data for the plots in **FIG. 5A** through **FIG. 5C** included a small ram extruder with a 1 mm (diameter opening) die. The ram is pushed at a constant rate while the barrel is heated at a constant rate, and pressure sensors in the barrel record the pressure P.

**FIG. 5A** through **FIG. 5C** reveal that the batch water content M₃₄ has a substantial impact on the sweep curve. As water is added to batch material **34,** the sweep curve moves down, thereby reducing the pressure P, and also moves to the right, thereby increasing the gelation temperature of the batch material.

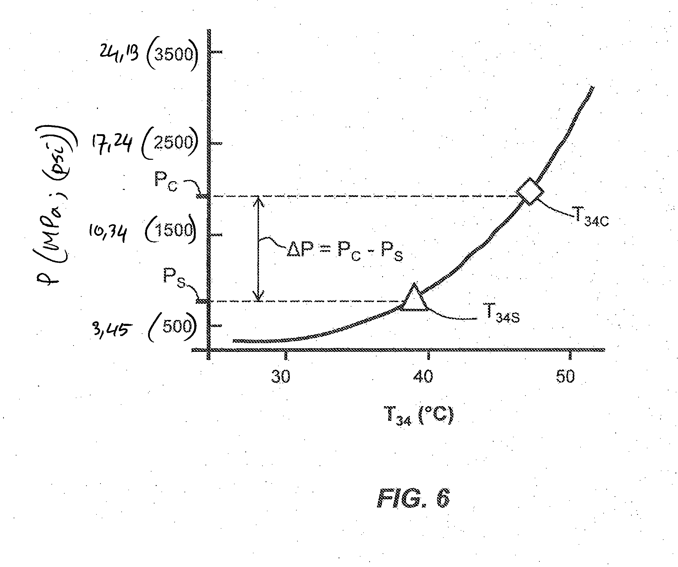

The locations of the skin and core temperatures T_{34S} and T_{34C} on the sweep curve have a significant impact on the shape of extrudate **100.** **FIG. 6** is a hypothetical temperature sweep curve representative of those shown in **FIG. 5A** through **FIG. 5C** and that includes example skin and core batch temperatures T_{34S} and T_{34C} indicated by a triangle and a diamond, respectively. As the batch temperature T₃₄ increases and moves up the sweep curve, the pressure P increases and the batch flow rate decreases as batch material **34** is extruded through die **92.** Conversely, as the batch temperature T₃₄ decreases and moves down the sweep curve, the batch flow rate of batch material **34** increases through die **92.**

As the core temperature T_{34C} is usually greater than the skin temperature T_{34S}, the extrudate **100** exhibits a flow differential corresponding to this temperature differential. Thus, the temperature differential between the batch material core and skin relates directly to the pressure differential, with the batch material core temperature T_{34C} being associated with core pressure P_{C} and batch material skin temperature T_{34S} being associated with skin pressure P_{S} via the sweep curve. And the pressure differential ΔP is associated with the shape of extrudate **100.**

Differences in the pressure differential ΔP from its optimal value based on the skin and core pressures, which depend not only on the skin and core temperatures, respectively, but also on the batch water M₃₄ and rotation rate RR, are the root cause of rheology induced shape errors in extruded ceramic honeycomb structures **100.**

Table 1 below summarizes a number of example extrusion parameter values for a number of corresponding sweep curves, which are shown in the indicated Figures.

| **TABLE 1 - Example Extrusion Parameters** | | | |
|---|---|---|---|
| **FIGURE** | **RR (RPM)** | **T91 (°C)** | **M34 (%)** |
| FIG. 7A | 19.2 | -2.8 | 15.5 |
| FIG. 7B | 16.8 | -2.8 | 15.5 |
| FIG. 7C | 16.8 | 0.8 | 15.5 |
| FIG. 7C | 18 | 0.8 | 15.5 |
| FIG. 8A | 19.2 | 0.8 | 16.1 |
| FIG. 8B | 16.8 | 0.8 | 16.1 |
| FIG. 8C | 16.8 | -2.8 | 16.1 |
| FIG. 9A | 19.2 | 1 | 16.1 |
| FIG. 9B | 18.0 | 1 | 15.8 |
| FIG. 9C | 20.0 | 1 | 15.8 |
| FIG. 9D | 16.0 | 1 | 15.8 |

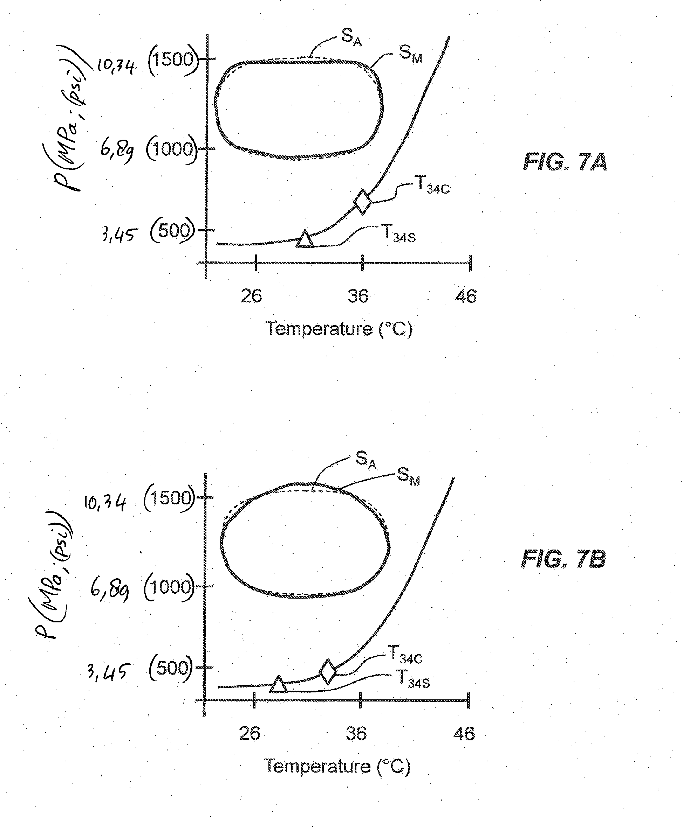

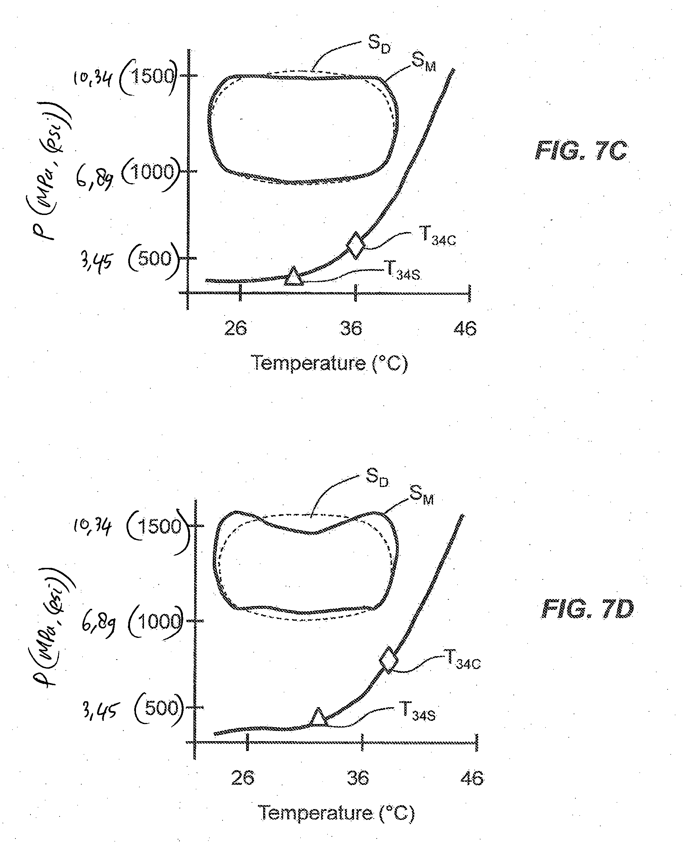

**FIG. 7A** through **FIG. 7D** are sweep curves where the rotation rate RR and the barrel temperature T₉₁ were varied and the batch water M₃₄ was kept at a constant 15.5%. The skin and core batch material temperatures T_{34S} and T_{34C} on each sweep curve are represented by a triangle and a diamond, respectively. Also shown along with each sweep curve is a cross-sectional plot of the desired extrudate shape S_{D} (dashed line), along with the actual measured extrudate shape S_{M} (solid line) as measured by a laser-based shape sensor unit **210.**

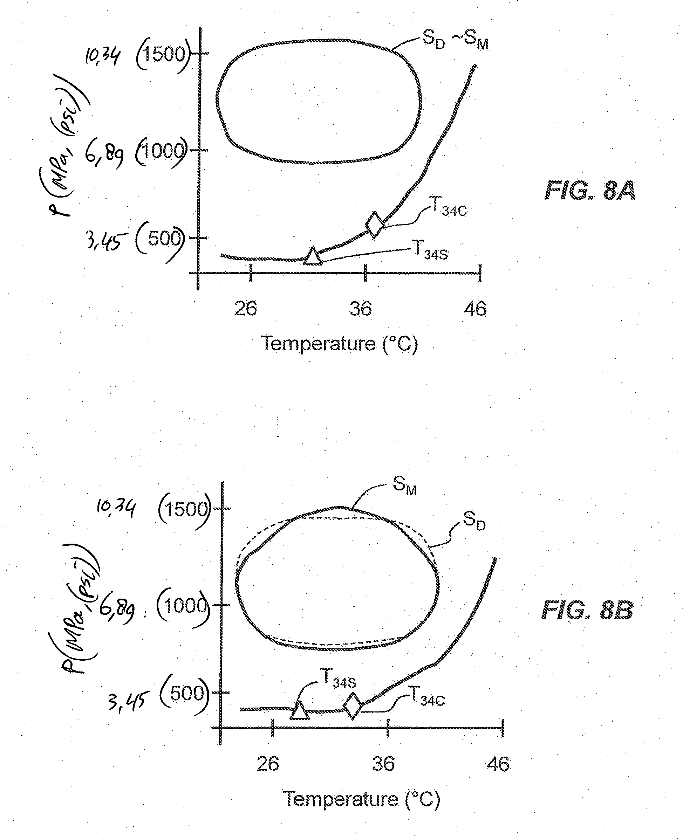

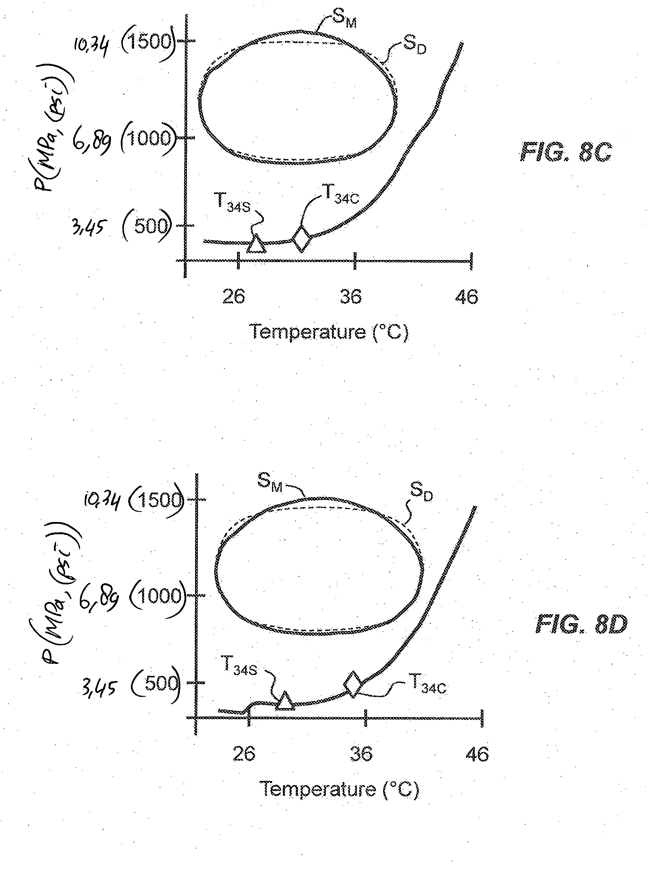

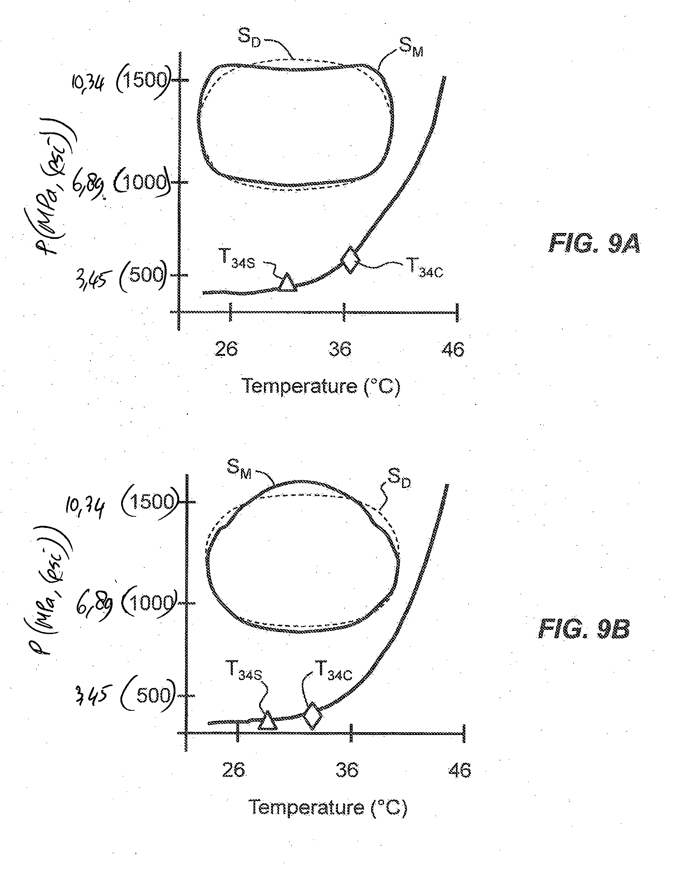

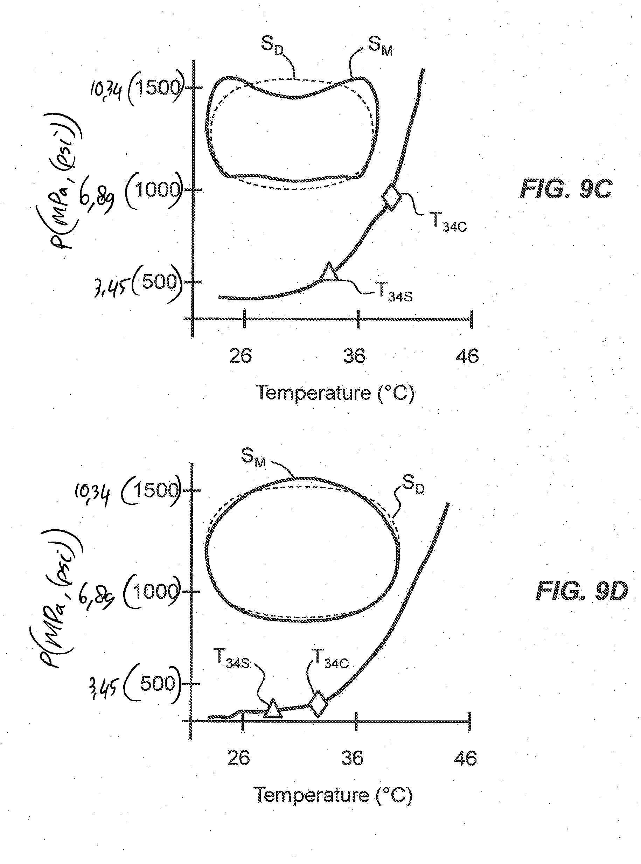

**FIG. 8A** through **FIG. 8D** are sweep curves similar to **FIG. 7A** through **FIG. 7B****,** but where the batch water M₃₄ was kept at a constant 16.1 %. **FIG. 9A** through **FIG. 9D** are sweep curves similar to **FIG. 7A** through **FIG. 7B****,** but where the batch water M₃₄ and rotation rate RR was varied while the barrel temperature T₉₁ was kept at a constant 1°C.

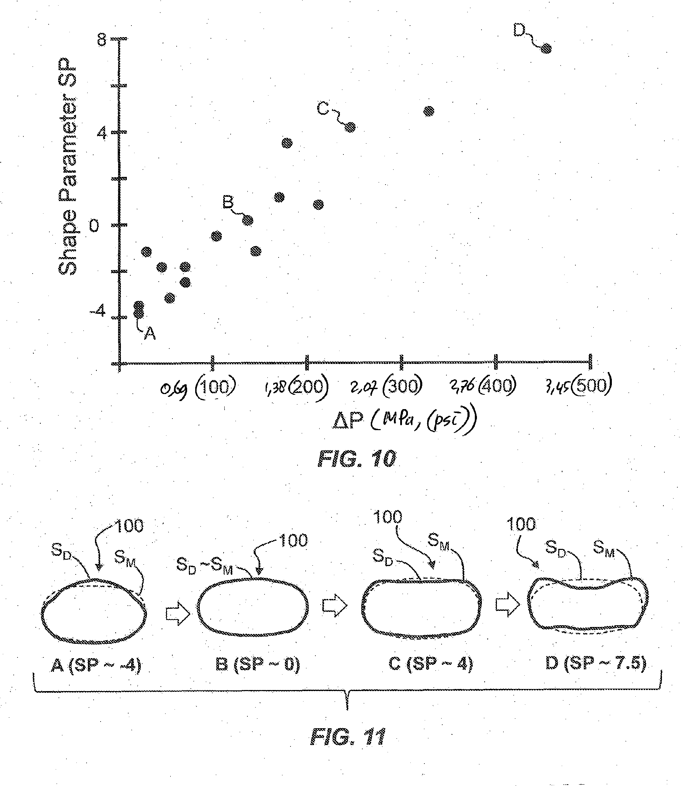

**FIG. 10** plots the pressure differential ΔP (MPa; (psi)) versus shape parameter SP based on the plots of **FIGS. 7A-7D****,** **8A-8D** and **9A-9D****.** The various values for the pressure differential correspond to certain extrudate shapes that can be characterized and assigned a shape parameter. The example shape parameters SP associated with **FIG. 10** range from -4 to +8, with the best shape have a shape parameter SP = 0, which in **FIG. 10** is associated with a pressure differential ΔP of about 1,03 MPa (150 psi). The shape parameters SP can be based on extrudate shapes that are known to occur during the particular extrusion process.

In an example, the pressure differential ΔP can be adjusted through hardware compensation, i.e., by changing the configuration of system **10,** such as the die size and shape. This could be done to move to the flatter portion of the sweep curve, which results in a more stable extrusion process because this portion of the sweep curve more readily accommodates variations in batch rheology.

**FIG. 11** illustrates the evolution of extrudate shape SP with pressure differential ΔP for four data points A, B, C and D from **FIG. 10****.** Data point B has a shape parameter SP = 0 and has the best shape, i.e., the least amount of shape error between the desired shape S_{D} and the measured shape S_{M}. Data point A corresponds to a shape parameter SP of about -4 and suffers from "pull in," where the sides (along the major axis of the oval) are pulled in so that the shape contour is more circular than the desired oval shape. Data point C corresponds to a shape parameter SP of about 4 and is more elongate and squared off as compared to the ideal oval shape. Data point D corresponds to a shape parameter SP of about 7.5 and is even more elongate and more squared off than shape C, and thus deviates even farther from the ideal shape than the shape associated with shape parameter SP = 4. In an example, measured and desired shapes S_{M} and S_{D}, along with shape parameter **SP,** can be displayed on display **300.**

An aspect of the disclosure is real-time, closed-loop shape control of extrudate **100** based on the batch water M₃₄, the barrel temperature T₉₁ and the rotation rate RR of the one or more extrusion screws **93.** A summary of the relationships between these three process control parameters and the differential ΔP as measured by a capillary rheometer is presented in Table 2, below. The extrusion data of Table 2 were taken from an extrusion process that used standard AT batch material extruded through a standard oval-shaped die.

| **TABLE 2 - Effect of unit parameter change on ΔP** | | |
|---|---|---|
| **Parameter** | **δ(ΔP)** | **p-Value** |
| **M₃₄** | -2,22 (-321.9) | 0.000 |
| **RR** | 0,36 (52.2) | 0.002 |
| **T₉₁** | 0,20 (29.2) | 0.004 |

The δ(ΔP) column quantifies the change in the pressure differential ΔP as a function of a change of 1 unit in the given process parameter. For batch water M₃₄, the unit change is 1%. For barrel temperature, the unit change is 1 °C. For rotation rate RR, the unit change is 1 RPM.

The date of Table 2 indicate that a 1% change in batch water M₃₄ changes the pressure differential ΔP by about -2,22 MPa (-322 psi). A change in the rotation rate RR of 1 RPM changes the pressure differential ΔP by about 0,34 MPa (+50 psi). A change in barrel temperature T₉₁ of 1°C changes the pressure differential ΔP by about 0,20 MPa (+29,2 psi).

The p-value in Table 2 indicates the statistical significance of the relationship of the different parameters to the pressure differential ΔP. A p-value of 0.01 or less indicates that there is a very strong relationship with a 99% or greater confidence level. From Table 2, it can be seen that all three process parameters M₃₄, T₉₁ and RR are all highly correlated to the pressure differential ΔP, and thus to the shape S of extrudate **100.**

Thus, an aspect of the disclosure is a real-time, closed-loop method for controlling a shape of extrudate 100 by exploiting the close relationship of the batch water M₃₄, the barrel temperature T₉₁ and the rotation rate RR of the one or more extrusion screws **93** to the extrudate shape S. The method includes forming extrudate **100** by extruding batch material **34** through an extruder barrel **91** and through an extruder die **92.** The method also includes measuring the batch water M₃₄ using, for example, moisture sensor **230,** and providing an electrical batch water signal **S₃₄** to master controller **MC,** or by determining the amount of water added to the batch material in water unit **50.** The method also includes measuring the barrel temperature T₉₁ using, for example, barrel temperature sensor **220,** and providing an electrical barrel temperature signal **S_{T91}** to master controller **MC.** The barrel temperature T₉₁ can also come from a barrel temperature control system **210.** In an embodiment, barrel temperature sensor **220** is part of barrel temperature control system **210.**

Optional steps include measuring the extrudate temperature profile either manually on a sample extrudate **100** or automatically with in-line temperature sensor **250** and correlating this data with the extrudate shape measurements to ensure correspondence between the extrudate shape measurements and the batch rheology.

The method further includes measuring the extrusion screw rotation rate RR using, for example, motor **95,** and providing an electrical rotation rate signal **S_{RR}** to master controller **MC.** The method also includes measuring the shape of extrudate **100** as it exits the die using, for example, shape sensor unit **240,** and providing an electrical shape signal **S₁₀₀** to master controller **MC.** The method also includes adjusting at least one of the batch water M₃₄, barrel temperature T₉₁ and rotation rate RR while extruding the extrudate **100** to maintain the extrudate shape to within a select tolerance. In an example, the select tolerance is defined as the measured contour not deviating from an ideal or desired contour by no more than ±1.0 mm. In an example, master controller **MC** is configured to compare the desired contour to the measured contour and to inform the end-user of extrusion system **10** (e.g., via a visual graphic on display **300** or via an audio alarm or both) if the measured shape is outside of the select tolerance.

The adjustment of the batch water M₃₄ may be accomplished via the operation of master controller **MC.** In an example, master controller MC sends a batch water control signal **S₂₀** to water tower **20,** which controls the moisture content of batch material **34,** e.g., by causing water unit **50** to increase or decrease the amount of water added to the batch material. Likewise, the adjustment of the barrel temperature T₉₁ may be accomplished by main controller **MC** sending a control signal **S₂₁₀** to barrel temperature control system **210** which, for example, in response thereto can control the flow of cooling fluid to set the barrel temperature T₉₁ to a desired value. Likewise, master controller **MC** can send a motor control signal **S₉₅** to motor **95** to cause a change in the rotation rate RR of one or more extrusion screws **95.** When the shape of extrudate **100** is within the select tolerance, the three parameter values are maintained and the shape of extrudate is monitored for shape changes (errors) that would require changing one or more of the batch water M₃₄, the barrel temperature T₉₁ and the rotation rate RR in response. In an example, master controller **MC** includes (e.g., via software) a quantified relationship between the batch material moisture measurement, the barrel temperature measurement, the extrusion screws rotation rate and the extrudate shape.

In an example, for a given type of batch material **34,** extrudate **100** is formed continuously as the batch water M₃₄, the barrel temperature T₉₁ and the rotation rate RR are varied while the extrudate shape is measured to establish sweep curves and shape parameter values that can be stored in master controller **MC.** Master controller MC can also process the stored parameter values to establish the aforementioned quantified relationship between the parameters. As described above, as an option the temperature profile of extrudate **100** can be measured either manually on a sample extrudate **100** or using in-line temperature sensor **250.** This temperature profile data is then used to assist in forming the quantified relationship and assuring that the batch rheology is consistent with the shape measurements.

Once the batch water M₃₄, the barrel temperature T₉₁ and the rotation rate RR are measured, one or more of these parameters can then be adjusted to correct shape errors and maintain extrudate **100** within a select shape tolerance.

It will be apparent to those skilled in the art that various modifications and variations can be made to the present disclosure without departing from the scope of the disclosure. Thus, it is intended that the present disclosure cover the modifications and variations of these disclosures provided that they come within the scope of the appended claims and their equivalents.

## Claims

1. A method for controlling a shape of a ceramic precursor extrudate, comprising:
forming the extrudate (100) by extruding a ceramic precursor batch material (34) through a barrel (91) and through an extruder die (92), the barrel having one or more extrusion screws (93) within the barrel (91) that control a rate of extrusion of the batch material through the die (92) in forming the extrudate;
measuring at least one of a barrel temperature and a screw temperature;
measuring a rotation rate of one or more of the extrusion screws within the barrel;
measuring the extrudate shape as the extrudate exits the die; **characterised in**
determining a batch material water content; and
adjusting at least one of the batch material water content, barrel temperature, screw temperature, and rotation rate in real time using a ceramic precursor extrudate control system according to any of claims 11-14 to maintain the extrudate shape to within a select tolerance.

2. The method according to claim 1, further comprising determining the batch material water content by measuring an amount of water added to the batch material (34) using a delivery scale (51).

3. The method according to claim 2, further comprising adjusting the batch material water content by changing the amount of water added to the batch material (34).

4. The method according to claim 1, further comprising the select tolerance being equal to +/- 1 mm.

5. The method according to claim 1, further comprising forming the batch material (34) to include aluminum titanate or cordierite.

6. The method according to claim 1, further comprising measuring the extrudate shape using a shape sensor unit (240) arranged adjacent the die and electrically connected to the controller (MC).

7. The method according to claim 1, further comprising determining extrudate shape parameters based on the measured batch material water content, the measured barrel temperature, the measured screw temperature, the rotation rate and measured extrudate shapes.

8. The method according to claim 7, further comprising identifying an optimum extrudate shape from the shape parameters.

9. The method according to claim 1, further comprising:
measuring an extrudate temperature profile either manually or automatically; and
correlating the measured extrudate temperature profile to the measured extrudate shape.

10. The method according to claim 1, further comprising:
defining a set of pressure versus temperature sweep curves;
determining extrudate shapes associated with each temperature sweep curve; and
performing said adjusting of at least one of the batch material water content, barrel temperature, screw temperature and rotation rate based on the determined extrudate shapes.

11. A ceramic precursor extrudate control system for controlling a shape of a ceramic precursor extrudate (100), comprising:
an extruder comprised of a barrel (91) adapted to contain a batch material (34);
an extruder die (92) operably disposed relative to the extruder barrel (91);
an extrusion screw system that includes at least one extrusion screw (93) within the barrel (91) and having a variable rotation rate, the extrusion screw system controlling a rate of extrusion of the batch material (34) through the die (92) and providing an extrusion screw rotation rate measurement;
a temperature control system (210) configured to control at least one of a barrel temperature and a screw temperature, and to provide a measurement of at least one of the barrel temperature and the screw temperature;
a shape sensor arranged adjacent the die and configured to provide an extrudate shape measurement; **characterized by** comprising
a water unit (50) configured to add a select amount of water to the batch material, with the select amount of water corresponding to a batch material moisture content; and
a controller (MC) configured to receive the batch material moisture content, the barrel temperature measurement, the rotation rate and the measured extrudate shape, and cause a change in at least one of the batch material moisture content, the barrel temperature, the screw temperature, and the rotation rate in real time to maintain the extrudate shape to within a select tolerance.

12. The system according to claim 11, further comprising the controller (MC) having a quantified relationship between the batch material moisture measurement, the barrel temperature measurement, the screw temperature measurement, the rotation rate and the extrudate shape.

13. The system according to claim 11, wherein the controller (MC) is operably connected to a water unit operable to add water to the batch material, with the controller being configured to control an amount of water the water unit adds to the batch material to change the batch material moisture content.

14. The system according to claim 11, wherein the water unit includes a delivery scale operable to add a select amount of water to the batch material.

## Patentansprüche

1. Verfahren zum Steuern einer Form eines keramischen Vorstufenextrudats, Folgendes umfassend:
Ausbilden des Extrudats (100) durch Extrudieren eines keramischen Vorstufenchargenmaterials (34) durch ein Spritzgehäuse (91) und durch ein Extrudermundstück (92), wobei das Spritzgehäuse eine oder mehrere Extrusionsschnecken (93) innerhalb des Spritzgehäuses (91) aufweist, welche eine Extrusionsgeschwindigkeit des Chargenmaterials durch das Mundstück (92) beim Ausbilden des Extrudats steuern;
Messen einer Spritzgehäusetemperatur und/oder einer Schneckentemperatur;
Messen einer Drehgeschwindigkeit einer oder mehrerer der Extrusionsschnecken innerhalb des Spritzgehäuses;
Messen der Extrudatform beim Austreten des Extrudats aus dem Mundstück;
**gekennzeichnet durch** Bestimmen eines Wassergehalts des Chargenmaterials; und
Einstellen des Wassergehalts des Chargenmaterials, der Spritzgehäusetemperatur, der Schneckentemperatur und/oder der Drehgeschwindigkeit in Echtzeit unter Verwendung eines Steuerungssystems für das keramische Vorstufenextrudat nach einem der Ansprüche 11 bis 14, um die Extrudatform innerhalb einer ausgewählten Toleranz zu halten.

2. Verfahren nach Anspruch 1, weiterhin umfassend ein Bestimmen des Wassergehalts des Chargenmaterials durch Messen einer Wassermenge, welche dem Chargenmaterial (34) zugesetzt wird, unter Verwendung einer Förderwaage (51).

3. Verfahren nach Anspruch 2, weiterhin umfassend ein Einstellen des Wassergehalts des Chargenmaterials durch Verändern der Wassermenge, welche dem Chargenmaterial (34) zugesetzt wird.

4. Verfahren nach Anspruch 1, weiterhin umfassend, dass die ausgewählte Toleranz gleich +/-1 mm ist.

5. Verfahren nach Anspruch 1, weiterhin umfassend ein Ausbilden des Chargenmaterials (34), so dass es Aluminiumtitanat oder Kordierit aufweist.

6. Verfahren nach Anspruch 1, weiterhin umfassend ein Messen der Extrudatform unter Verwendung einer Formsensoreinheit (240), welche dem Mundstück benachbart angeordnet ist und mit der Steuerungsvorrichtung (MC) elektrisch verbunden ist.

7. Verfahren nach Anspruch 1, weiterhin umfassend ein Bestimmen von Extrudatformparametern auf der Grundlage des gemessenen Wassergehalts des Chargenmaterials, der gemessenen Spritzgehäusetemperatur, der gemessenen Schneckentemperatur, der Drehgeschwindigkeit und der gemessenen Extrudatformen.

8. Verfahren nach Anspruch 7, weiterhin umfassend ein Identifizieren einer optimalen Extrudatform aus den Formparametern.

9. Verfahren nach Anspruch 1, weiterhin Folgendes umfassend:
Messen eines Extrudattemperaturprofils entweder manuell oder automatisch; und
Korrelieren des gemessenen Extrudattemperaturprofils mit der gemessenen Extrudatform.

10. Verfahren nach Anspruch 1, weiterhin Folgendes umfassend:
Definieren eines Satzes von Druck-versus-Temperatur-Abtastkurven;
Bestimmen von Extrudatformen, welche jeder Temperaturabtastkurve zugeordnet sind; und
Durchführen des Einstellens des Wassergehalts des Chargenmaterials, der Spritzgehäusetemperatur, der Schneckentemperatur und/oder der Drehgeschwindigkeit auf der Grundlage der bestimmten Extrudatformen.

11. Steuerungssystem für ein keramisches Vorstufenextrudat zum Steuern einer Form eines keramischen Vorstufenextrudats (100), Folgendes umfassend:
einen Extruder, welcher ein Spritzgehäuse (91) umfasst, welches eingerichtet ist, ein Chargenmaterial (34) zu enthalten;
ein Extrudermundstück (92), welches hinsichtlich des Extruderspritzgehäuses (91) betriebsfähig angeordnet ist;
ein Extrusionsschneckensystem, welches mindestens eine Extrusionsschnecke (93) innerhalb des Spritzgehäuses (91) umfasst und eine variable Drehgeschwindigkeit aufweist, wobei das Extrusionsschneckensystem eine Extrusionsgeschwindigkeit des Chargenmaterials (34) durch das Mundstück (92) steuert und eine Messung der Drehgeschwindigkeit der Extrusionsschnecke bereitstellt;
ein Temperatursteuerungssystem (210), welches konfiguriert ist, eine Spritzgehäusetemperatur und/oder eine Schneckentemperatur zu steuern und eine Messung der Spritzgehäusetemperatur und/oder der Schneckentemperatur bereitzustellen;
einen Formsensor, welcher dem Mundstück benachbart angeordnet ist und konfiguriert ist, eine Messung der Extrudatform bereitzustellen;
**gekennzeichnet durch** Umfassen einer Wassereinheit (50), welche konfiguriert ist, dem Chargenmaterial eine ausgewählte Wassermenge zuzusetzen, wobei die ausgewählte Wassermenge einem Feuchtigkeitsgehalt des Chargenmaterials entspricht; und
eine Steuerungsvorrichtung (MC), welche konfiguriert ist, den Feuchtigkeitsgehalt des Chargenmaterials, die Messung der Spritzgehäusetemperatur, die Drehgeschwindigkeit und die gemessene Extrudatform zu empfangen und eine Veränderung des Feuchtigkeitsgehalts des Chargenmaterials, der Spritzgehäusetemperatur, der Schneckentemperatur und/oder der Drehgeschwindigkeit in Echtzeit zu bewirken, um die Extrudatform innerhalb einer ausgewählten Toleranz zu halten.

12. System nach Anspruch 11, weiterhin umfassend, dass die Steuerungsvorrichtung (MC) eine quantifizierte Beziehung zwischen der Feuchtigkeitsmessung des Chargenmaterials, der Messung der Spritzgehäusetemperatur, der Messung der Schneckentemperatur, der Drehgeschwindigkeit und der Extrudatform aufweist.

13. System nach Anspruch 11, wobei die Steuerungsvorrichtung (MC) mit einer Wassereinheit betriebsfähig verbunden ist, welche betriebsfähig ist, dem Chargenmaterial Wasser zuzusetzen, wobei die Steuerungsvorrichtung konfiguriert ist, eine Wassermenge zu steuern, welche die Wassereinheit dem Chargenmaterial zusetzt, um den Feuchtigkeitsgehalt des Chargenmaterials zu verändern.

14. System nach Anspruch 11, wobei die Wassereinheit eine Förderwaage aufweist, welche betriebsfähig ist, um dem Chargenmaterial eine ausgewählte Wassermenge zuzusetzen.

## Revendications

1. Procédé de contrôle de la forme d'une ébauche céramique extrudée, le procédé comportant les étapes qui consistent à :
former l'extrudé (100) en extrudant un matériau céramique d'ébauche (34) dans un cylindre (91) et à travers une filière d'extrusion (92), le cylindre présentant une ou plusieurs vis d'extrusion (93) situées à l'intérieur du cylindre (91) et contrôlant la vitesse d'extrusion du matériau à travers la filière (92) qui forme l'extrudé,
mesurer la température du cylindre et/ou la température de la vis,
mesurer la vitesse de rotation de la ou des vis d'extrusion prévues dans le cylindre et
mesurer la forme de l'extrudé lorsque l'extrudé quitte la filière,
**caractérisé en ce que**
la teneur en eau du matériau est déterminée et
**en ce que** la teneur en eau du matériau, la température du cylindre, la température de la ou des vis et la vitesse de rotation sont ajustées en temps réel en recourant à un système de contrôle de l'ébauche en céramique extrudée selon l'une des revendications 11 à 14 pour maintenir la forme de l'extrudé à l'intérieur de tolérances sélectionnées.

2. Procédé selon la revendication 1, comportant en outre l'étape qui consiste à déterminer la teneur en eau du matériau en mesurant la quantité d'eau ajoutée au matériau (34) à l'aide d'une balance de fourniture (51).

3. Procédé selon la revendication 2, comprenant en outre l'étape qui consiste à ajuster la teneur en eau du matériau en modifiant la quantité d'eau ajoutée au matériau (34).

4. Procédé selon la revendication 1, dans lequel la tolérance sélectionnée est en outre égale à +/- 1 mm.

5. Procédé selon la revendication 1, comportant en outre l'étape qui consiste à former le matériau (34) de telle sorte qu'il contienne du titanate d'aluminium ou de la cordiérite.

6. Procédé selon la revendication 1, comportant en outre l'étape qui consiste à mesurer la forme de l'extrudé en utilisant une unité (240) à capteur de forme agencée en position adjacente à la filière et raccordée électriquement au contrôleur (MC).

7. Procédé selon la revendication 1, comportant en outre l'étape qui consiste à déterminer les paramètres de forme de l'extrudé sur la base de la teneur en eau mesurée sur le matériau, de la température mesurée sur le cylindre, de la température mesurée sur la ou les vis, de la vitesse de rotation et des formes mesurées sur l'extrudé.

8. Procédé selon la revendication 7, qui comporte en outre l'étape qui consiste à identifier une forme optimale de l'extrudé à partir des paramètres de forme.

9. Procédé selon la revendication 1, comportant en outre les étapes qui consistent à
mesurer manuellement ou automatiquement le profil de température de l'extrudé et
corréler le profil de température mesuré sur l'extrudé avec la forme mesurée de l'extrudé.

10. Procédé selon la revendication 1, comportant en outre les étapes qui consistent à :
définir un jeu de courbes de pression en fonction de la dérive en température,
déterminer les formes de l'extrudé associées à chaque courbe de dérive de température et
exécuter ledit ajustement de la teneur en eau du matériau, de la température du cylindre, de la température de la ou des vis et de la vitesse de rotation sur la base des formes déterminées sur l'extrudé.

11. Système de contrôle d'ébauches en céramique extrudée destiné à contrôler la forme d'une ébauche (100) en céramique extrudée, le système de contrôle comprenant :
une extrudeuse constituée d'un cylindre (91) adapté pour contenir un matériau (34),
une filière d'extrusion (92) disposée en position de travail par rapport au cylindre d'extrusion (91),
un système de vis d'extrusion qui comprend au moins une vis d'extrusion (93) disposée dans le cylindre (91) et présentant une vitesse de rotation variable, le système de vis d'extrusion contrôlant la vitesse d'extrusion du matériau (34) à travers la filière (92) et permettant de mesurer la vitesse de rotation de la vis d'extrusion,
un système (210) de contrôle de température configuré pour contrôler la température du cylindre et/ou la température de la ou des vis et pour délivrer une mesure de la température du cylindre et/ou de la température de la ou des vis et
un capteur de forme agencé en position adjacente à la filière et configuré pour fournir une mesure de la forme de l'extrudé,
**caractérisé en ce qu'**il comporte
une unité (50) de fourniture d'eau configurée pour ajouter une quantité sélectionnée d'eau au matériau, la quantité sélectionnée d'eau correspondant à la teneur en humidité du matériau et
un contrôleur (MC) configuré pour recevoir la teneur en humidité du matériau, la mesure de température du cylindre, la vitesse de rotation et la forme mesurée sur l'extrudé et pour amener une modification en temps réel de la teneur en humidité du matériau, de la température du cylindre, de la température de la ou des vis et de la vitesse de rotation en vue de maintenir la forme de l'extrudé à l'intérieur de tolérances sélectionnées.

12. Système selon la revendication 11, dans lequel le contrôleur (MC) présente en outre une relation quantifiée entre la mesure de l'humidité du matériau, la mesure de la température du cylindre, la mesure de la température de la ou des vis, la vitesse de rotation et la forme de l'extrudé.

13. Système selon la revendication 11, dans lequel le contrôleur (MC) est raccordé fonctionnellement à une unité de fourniture d'eau apte à être utilisée pour ajouter de l'eau au matériau, le contrôleur étant configuré pour contrôler la quantité d'eau que l'unité d'alimentation en eau ajoute au matériau en vue de modifier la teneur en humidité du matériau.

14. Système selon la revendication 11, dans lequel l'unité de fourniture d'eau comprend une balance de fourniture qui peut être utilisée pour ajouter une quantité sélectionnée d'eau au matériau.
